(19) **Europäisches Patentamt**
**European Patent Office**
**Office européen des brevets**

(11) **EP 3 892 744 B1**

(12) **EUROPEAN PATENT SPECIFICATION**

(45) Date of publication and mention
of the grant of the patent:
**28.12.2022 Bulletin 2022/52**

(21) Application number: **19891967.2**

(22) Date of filing: **26.08.2019**

(51) International Patent Classification (IPC):
**C22B 1/16** (2006.01)   **B01J 2/12** (2006.01)
**C22B 1/20** (2006.01)   **C22B 1/24** (2006.01)
**C22B 1/243** (2006.01)  **C22B 1/245** (2006.01)

(52) Cooperative Patent Classification (CPC):
**C22B 1/205; C22B 1/16; C22B 1/2406;**
**C22B 1/243; C22B 1/245;** B01J 2/12

(86) International application number:
**PCT/JP2019/033260**

(87) International publication number:
**WO 2020/115959 (11.06.2020 Gazette 2020/24)**

(54) **SINTERED ORE MANUFACTURING METHOD**

SINTERERZHERSTELLUNGSVERFAHREN

PROCÉDÉ DE FABRICATION DE MINERAI FRITTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.12.2018   JP 2018229940**

(43) Date of publication of application:
**13.10.2021   Bulletin 2021/41**

(73) Proprietor: **JFE Steel Corporation**
**Tokyo 100-0011 (JP)**

(72) Inventors:
• **YAMAMOTO, Tetsuya**
  **Tokyo 100-0011 (JP)**
• **HIGUCHI, Takahide**
  **Tokyo 100-0011 (JP)**
• **HIROSAWA, Toshiyuki**
  **Tokyo 100-0011 (JP)**
• **IWASE, Kazumi**
  **Tokyo 100-0011 (JP)**

• **TAKEHARA, Kenta**
  **Tokyo 100-0011 (JP)**
• **FUJIWARA, Shohei**
  **Tokyo 100-0011 (JP)**
• **JINNO, Tetsuya**
  **Tokyo 100-0011 (JP)**
• **WATANABE, Soichiro**
  **Tokyo 100-0011 (JP)**
• **TAMURA, Koichi**
  **Tokyo 100-0011 (JP)**

(74) Representative: **Haseltine Lake Kempner LLP**
**Bürkleinstrasse 10**
**80538 München (DE)**

(56) References cited:
**WO-A1-2019/167888      CN-A- 107 304 461
CN-A- 107 304 461       JP-A- S58 120 749
JP-A- S59 229 423       JP-A- 2018 003 153**

**Description**

Technical Field

This invention relates to a method for manufacturing sintered ore, and particularly proposes a method effective for attaining an improvement in productivity of the sintered ore by using a granulated raw material for sintering that contributes to reducing the size of a wet zone that appears in a raw material charged layer on a pallet of a sintering machine.

Background Art

In an operation of a sintering machine, it has been known that a wet zone has a large influence on pressure loss in a raw material charged layer on a pallet, and efforts have been made to reduce the used amount of carbon material and increase sintering productivity, by decreasing the ratio occupied by the wet zone. For example, Patent Literature 1, Patent Literature 3 and Patent Literature 4 disclose a method for manufacturing sintered ore by adding water and a binder to a raw material for sintering containing a carbon material to granulate the mixture, drying the mixture in a rotary kiln to obtain a granulated raw material for sintering, and charging the granulated raw material for sintering to sinter the granulated raw material on a pallet. In this method, however, a special equipment such as rotary kiln is required to dry the granulated raw material for sintering with the rotary kiln or the like.

Patent Literature 2 proposes a method in which lump ore as a raw material for a blast furnace for charging in a blast furnace is charged into a cooler equipped in a sintering machine to dry the lump ore in advance. That is, in this method, the lump ore for charging in a blast furnace is charged into the cooling device (cooler) of the sintering machine at a position where the temperature inside the device (temperature of the sintered ore to be cooled) reaches 300 to 600°C and dried in advance.

A production volume (t/h) of a sintering machine is usually determined by a production rate (t/(h $\times$ m$^2$)) $\times$ area (m$^2$) of sintering machine. That is, the production volume of a sintering ore is determined by the specifications of the sintering machine (width of machine, length of machine), thickness of a charged layer, bulk density of a raw material for sintering, sintering (burning) time, yield of a sintered ore product and so on. In order to increase the production volume of the sintered ore, therefore, it is considered effective to improve the gas permeability of the charged layer (pressure loss) to shorten the sintering time or to raise the strength of the sintered ore product thereby to improve the yield.

Recently, powdery iron ore as the raw material for sintering has become low grade due to the exhaustion of high-quality iron ore, not only causing an increase in slag ingredient and further reduction in iron ore powder size, but also resulting in deterioration in granulation property due to an increase in alumina (Al$_2$O$_3$) content, ratio of fine powder, and the like. On the contrary, a low slag ratio is required for the blast furnace from a viewpoint of lowering molten iron production cost of molten iron and reducing CO$_2$ generation amount. Accordingly, sintered ore having a high reducibility and a high strength has been demanded.

Citation List

Patent Literature

    Patent Literature 1: JP-A-2007-169780
    Patent Literature 2: JP-A-2013-119667
    Patent Literature 3: CN-107-304-461-A
    Patent Literature 4: JP-2018-003153-A

Summary of Invention

Technical Problem

In order to improve the productivity of the sintered ore in the above conventional methods, for example, a new special facility (rotary kiln) is necessary in the method disclosed in Patent Literature 1 in which the granulated raw material for sintering is dried with the rotary kiln in advance, causing a cost increase problem that the facility cost increases and fuel is required in addition to a bonding agent used in the sintering process.

Also, in the method disclosed in Patent Literature 2, a heat source of a cooler in a sintering machine is used for preheating lump ore to be charged into the blast furnace. Therefore, this method is not to improve the productivity of sintered ore and increase the quality of the material charged layer by controlling the wet zone of the raw material charged layer on the pallet through the improvement of the granulated raw material for sintering itself.

In granulation of a compounding raw material for sintering containing a large amount of fine powdery iron ore with a particle size of not more than 150 μm, called as a pellet feed, it is usually known that the particle size becomes irregular to produce coarse agglomerated particles, which are just agglomerate of fine powder. When a load (compression force) is applied onto a pallet of a sintering machine, where such coarse agglomerated particles having a weak bonding strength are deposited with a certain thickness, the agglomerated particles tend to be collapsed and easily pulverized, causing decrease in a void ratio in the charged layer. Accordingly, the gas permeability in the charged layer is deteriorated to hinder the combustion of the material for sintering, resulting that the sintering time for the sintered ore is prolonged and thus the productivity of the sintered ore is lowered. On the other hand, when the sintering time is shortened, the sintering becomes insufficient to decrease the yield of the sintered ore, causing a problem that productivity of the sintered ore is lowered.

It is, therefore, an object of the invention to solve the above problem of the techniques inherent to the prior arts, and particularly, to propose a method for manufacturing sintered ore in which a granulated raw material for sintering formed by heated to a temperature more than a certain value and humidified with steam in the granulation is charged into a sintering machine, whereby the gas permeability of the charged layer can be improved, and hence the productivity of the sintered ore can be increased.

Solution to Problem

To solve the above problem, according to the invention, a compounded raw material for sintering is granulated while being heated and humidified by blowing vapor such as steam into a high-speed agitating mixer such as drum mixer, Eirich mixer or the like or a granulator such as pelletizer or the like, thereby forming a granulated raw material for sintering with a temperature higher than the starting temperature of the compounded raw material for sintering before the charging into the drum mixer. For example, a hot granulated material for sintering (granulated raw material for sintering) with a temperature of not lower than 45°C, which is higher than the starting temperature of the compounded raw material for sintering, more preferably a temperature of not lower than 60°C but lower than 70°C, is formed and charged onto a pallet of the sintering machine.

That is, the invention is a method for manufacturing sintered ore as disclosed in appended claims 1-5.

Advantageous Effect of Invention

According to the invention, a compounded raw material for sintering is granulated in a high-speed agitating mixer such as drum mixer, Eirich mixer or the like or a granulator such as pelletizer or the like while blowing steam therein, whereby a granulated raw material heated and humidified to a temperature higher than the starting temperature (temperature of the compounded raw material for sintering before the charging into the granulator or the like) of the initial material (raw material stored in raw material yard) by not lower than 10°C, and thus, a larger amount of a raw material for sintering containing fine powdery iron ore with a particle size of not more than 150 μm can be used as the compounded raw material for sintering. Moreover, according to the invention, the gas permeability is improved on the raw material charged layer on the sintering machine pallet, where the obtained granulated raw material for sintering is charged, so that the production rate of the sintered ore is increased dramatically.

Brief Description of Drawings

FIG. 1 is a view showing a process flow according to the invention, where FIG. 1(a) is a schematic view illustrating an arrangement of a drum mixer and a steam pipe, and FIG. 1(b) is a sectional view illustrating an internal state of the drum mixer.

FIG. 2 is a graph showing a relation between a steam blowing time and a temperature increase of a granulated raw material for sintering when the steam blowing time is varied.

FIG. 3 is a graph showing a relation between a temperature of a granulated raw material for sintering and a water content after granulation.

FIG. 4 is a graph showing a relation between a ratio of fine powders of not more than 150 μm in a compounded raw material for sintering and an effect of improving a production rate.

FIG. 5(a) to 5(c) are views explaining a method of evaluating heat transfer to a compounded raw material for sintering accompanying blowing of steam.

Description of Embodiments

A granulated raw material for sintering (pseudo particles) to be charged onto a pallet of a sintering machine for manufacturing sintered ore is usually prepared by, firstly,

storing a raw material comprising iron ore powder called as a sinter feed having a size of about 1.0 to 5.0 mm as an arithmetic average particle size,
miscellaneous iron sources such as various dusts generated in iron mills or the like,
a CaO containing material such as limestone, quicklime, steelmaking slag and the like,
a bonding agent such as coke breeze, anthracite coal or the like, and
arbitrary compounded material such as a MgO containing material composed of refining nickel slag, dolomite, serpentine and the like, and a $SiO_2$ containing material composed of refining nickel slag, silica stone (silica sand) and the like
in a hopper and then cutting out the compounded raw material for sintering at a given ratio from the hopper onto a conveyer to form a compounded raw material for sintering,
charging the compounded raw material for sintering into a granulator and
granulating while agitating and mixing with necessary humidification to obtain a granulated raw material for sintering (pseudo particles) having an arithmetic average particle size of about 3.0 to 6.0 mm.

In this description, the arithmetic average particle size is a particle size defined by $[\Sigma(di \times vi)]$, and the harmonic average particle size is a particle size defined by $[1/\Sigma (vi/di)]$. In this case, vi is a ratio of particles present in i-th grit number range and di is a typical particle size in i-th grit number range.

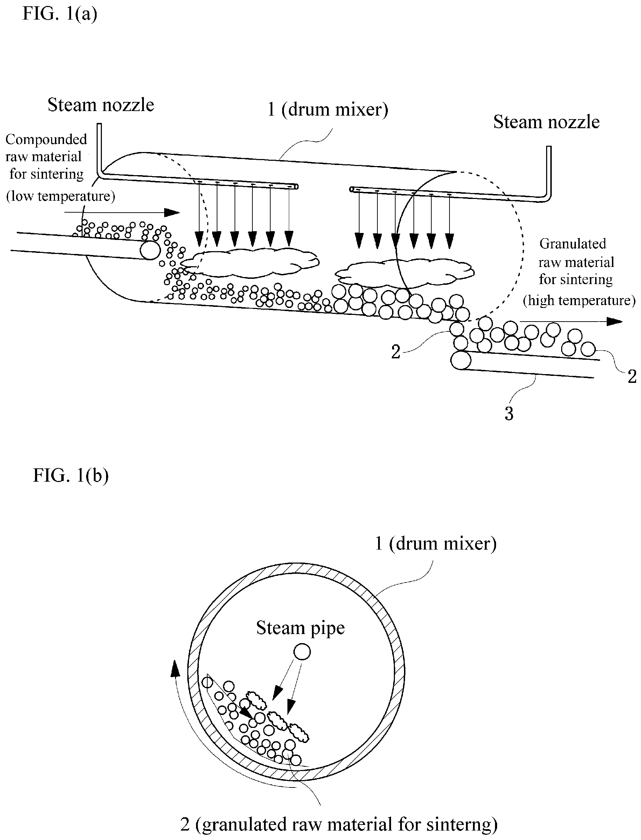

In the invention, a granulator used for granulating the compounded raw material for sintering can use the aforementioned high-speed agitating mixer or pelletizer, but it is preferable to use a drum mixer as shown in FIG. 1, and a plurality of drum mixers may be used. The following is an example of using a drum mixer as a granulator.

Moreover, the granulated raw material for sintering (pseudo particles) obtained by the granulation with the drum mixer is first charged to a thickness (height) of about 400 to 600 mm onto a pallet of a sintering machine by a charging device disposed above the sintering machine and deposited to form a raw material charged layer. Then, carbon material contained in the raw material charged layer is ignited by an ignition furnace disposed above the raw material charged layer. Thereafter, the carbon material in the raw material charg ed layer is sequentially burnt from the surface thereof by downward suction with a wind box disposed below the pallet, and the charged raw material (granulated raw material for sintering composed mainly of pseudo particles) is sintered by sequentially burning and melting with the generated combustion heat. Thereafter, the sintered layer (sinter cake) obtained on the pallet of the sintering machine passes through a crushing machine and a cooler of the sintering machine, sieved for sizing, and sorted into a lumpy sintered ore product of not less than 5 mm and a return ore of less than 5 mm and recovered.

FIG. 1 is a diagram explaining an embodiment of the invention at the stage where a granulated raw material for sintering supplied to a sintering machine is first manufactured (granulated) by using a granulator (drum mixer). In the invention, when granulation is performed in a granulator such as drum mixer 1, as shown in FIG. 1, steam for example, is blown (jetted) into the drum mixer 1, whereby the temperature of a granulated raw material for sintering 2 is raised to a temperature at least not lower than 10°C higher than the starting temperature of the compounded raw material for sintering at the charging into the drum mixer 1, about a temperature at least not lower than 10°C higher than a temperature from air temperature to 35°C (temperature at an entry side of the drum mixer). Preferably, the granulated raw material for sintering 2 is heated and humidified to have the temperature of 45 °C to lower than 70°C and a water content of a given value.

According to this method, the temperature of the granulated raw material for sintering 2 in the charged layer charged into the pallet 3 of the sintering machine can be raised higher than the usual value, which leads to reduce precipitation of the water content that has been vaporized in a combustion melting zone inside the charged layer. Accordingly, pressure loss in the sintering machine (especially in a wet zone) can be reduced, and hence the production rate of the sintered ore in the sintering machine can be increased.

Sintered ore may be manufactured by charging the granulated raw material for sintering (pseudo particles) manufactured by the granulation method adapted to the invention and another raw material for sintering produced by a method not adapted to the invention together onto the pallet of the sintering machine. In this case, the desired effect of the invention can be obtained by charging the granulated raw material for sintering produced by the granulation method adapted to the invention in an amount of not less than 50 mass% with respect to the total amount of the materials charged into the sintering machine.

Both temperatures of the compounded raw material for sintering and the granulated raw material for sintering may be measured by using a contact-type thermometer such as thermocouple or the like before and after the granulator, and may be measured by using a non-contact type thermometer such as radiation thermometer or the like. When the radiation thermometer is used, in particular, the emissivity may vary within a range of 0.6 to 1.0 depending on the brand of the compounded raw material for sintering, causing measurement error of the temperature. Therefore, it is desirable to set the emissivity in advance by using the radiation thermometer and the contact-type thermometer at the same time for measurement.

To blow steam required for raising the temperature of the granulated raw material for sintering to a temperature not lower than 10°C higher than the temperature of the compounded raw material for sintering at the entry side of the drum mixer 1 in an amount of not less than 3 kg/t-s, preferably about 4 kg/t-s to 25 kg/t-s, so that the granulated raw material for sintering is humidified to have the target water content of 6 to 10 mass%. By blowing this amount of steam, the water content of 6 to 10 mass% of the granulated raw material for sintering and good gas permeability of the charged layer on the pallet 3 of the sintering machine is secured, which leads to an improvement in the production rate of the sintered ore. That is, the water content is different in accordance with the water content at the entry side of the drum mixer and the brand and particle size of the iron ore used as a raw material, but is about 6 to 10 mass% in the usual granulated raw material for sintering.

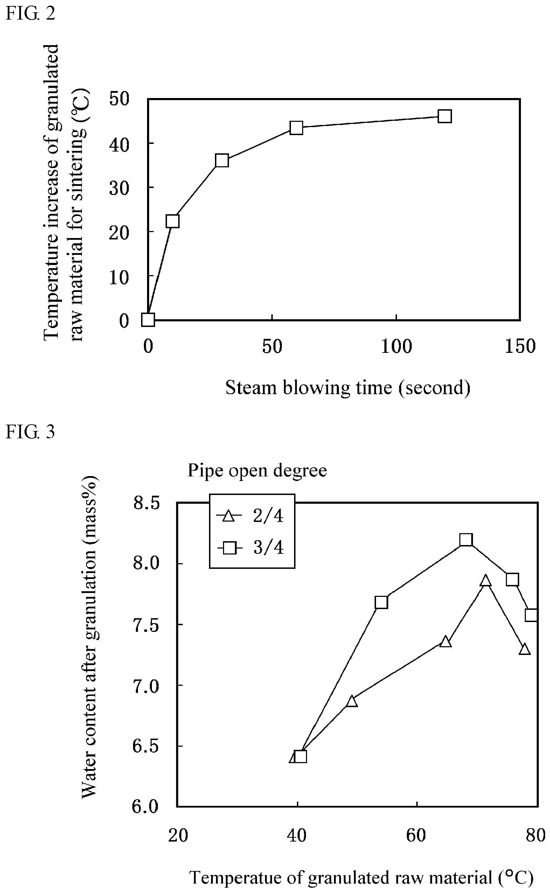

In general, sensible heat of water at 100°C is not less than 2200 kJ/kg, and specific heat of water is 4.2 kJ/kg, and thus heat quantity required for steam to return to liquid water is very large. FIG. 2 is a view showing a temperature change of the granulated raw material for sintering after the granulation when the steam blowing time is varied. As seen from FIG. 2, when the sensible heat inherent to the steam is used, the temperature of the compounded raw material for sintering can be easily raised to a temperature not lower than 10°C higher than the temperature of the compounded raw material for sintering just before the charging into the drum mixer, that is, about not lower than 45°C, preferably about 70°C by the granulation treatment of about several ten seconds.

According to the inventors' studies, it has been found out that when the temperature of the granulated raw material for sintering granulated (pseudo particles) exceeds 70°C, vaporization from the granulated raw material for sintering becomes active to bring about not only the decrease in the water content of the pseudo particles after the granulation but also remarkable endotherm due to evaporative latent heat.

For example, FIG. 3 is a view showing a change in the water content contained in the granulated raw material for sintering after the granulation at the exit side of the drum mixer with respect to the temperature of the granulated raw material for sintering. As seen from FIG. 3, when the temperature of the granulated raw material for sintering reaches about 70°C, the water content increases due to condensation of steam caused by the temperature rise, and at the same time, the water content starts to decrease after the temperature reached 70°C, and so-called evaporation of water from the granulated raw material for sintering is caused. That is, when the opening degree of the steam pipe is 2/4 or 3/4, as the opening degree becomes larger, the increase of the water content by the temperature rise becomes faster. According to the inventors' experiment, it is considered that when the temperature of the granulated raw material for sintering exceeds 70°C, the water content inversely decreases as shown in FIG. 3 suggesting that the change from humidifying to drying is caused.

In the invention, it has been found that when the temperature of the granulated raw material for sintering (pseudo particles) discharged from the drum mixer exceeds 70°C, it is preferable to adjust the water content of the granulated raw material for sintering to approximately 0.5 mass% to 3.0 mass% higher than the target value (6 to 10 mass%) of the water content, that is, or to 6.5 to 13 mass%, by adding factory water, hot water, condensed water of steam or the like, in consideration of the water content to be condensed by the blowing of steam.

Also, it is desirable to directly transfer heat from the blown steam to the compounded raw material without going through the inner face of the drum mixer.

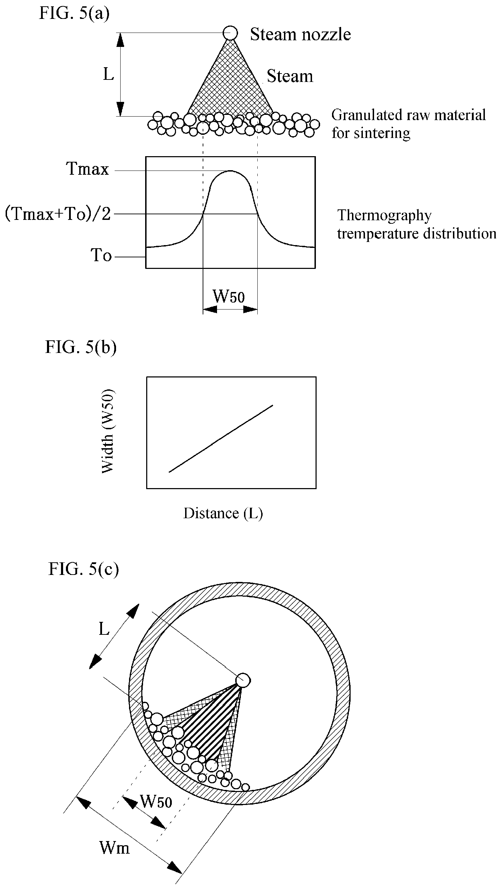

The method for evaluating heat transfer from the steam to the compounded raw material for sintering will be described below. At first, steam is blown onto a compounded raw material for sintering placed in advance at a thickness of not less than 150 mm for one minute in a laboratory, and a temperature distribution on the surface of the compounded raw material for sintering is measured with a thermography immediately after the blowing. A width $W_{50}$, which is a width of the range where the temperature is higher than the intermediate temperature value (To + Tmax)/2 between the temperature To and the highest temperature Tmax, that is, a temperature range of not lower than the intermediate temperature value, is measured, where To represents a temperature when steam is not blown, and the measurement results are shown in FIG. 5(a). The measurement is conducted by changing a distance L between the compounded raw material for sintering and the steam nozzle, and the relation between the distance L and the width $W_{50}$ is shown in FIG. 5(b). In FIG. 5(b), $W_{50}$ represents a width of a region (range) having a temperature higher than the intermediate temperature raised in association with the blowing of the steam, that is, a width of the range in which a temperature increase by the steam blowing is not less than 50% of the maximum temperature increase.

Thus, the relation between the distance L and the width $W_{50}$ is prepared for each type of steam nozzle and blowing rate of steam. In the actual granulation with a drum mixer, a ratio $W_{50}$/Wm of the width $W_{50}$, which is determined from the steam nozzle type, the blowing rate of the steam and the distance L between the compounded raw material for sintering and the steam nozzle, to the width Wm where the compounded raw material for sintering is present is determined as an index for evaluating direct heat transfer from the steam to the raw mixed material (FIG. 5c). As a result, it can be seen that the ratio $W_{50}/Wm$ is desirably not more than 1.2, more desirably not more than 0.8, further desirably not more than 0.6.

Remarks:

$$W_{50}/Wm \leq 0.8$$

, where $W_{50}$ is a width of the range in which a temperature increase by the steam blowing is not less than 50% of the maximum temperature increase, and
Wm is a width where the compounded raw mixed material is present.

The fine powdery iron ore (arithmetic average particle size: not more than 150 $\mu$m) in the compounded raw material for sintering easily forms granulation particles (pseudo particles) when it contains water. Therefore, it is preferable to crush the iron ore particles in a dry state with a force enough not to crush them, and then sieve them before use. An iron ore having an arithmetic average particle size of more than 150 $\mu$m to 10000 $\mu$m as an iron-containing raw material other than the fine powdery iron ore, an auxiliary product such as dust or the like, MgO containing material such as serpentine or the like, or $SiO_2$ containing material such as silica stone or the like are compounded with various CaO containing auxiliary materials and carbon material.

The particle size of the granulated raw material for sintering (pseudo particles) obtained by the aforementioned granulation treatment is preferable to be about 0.5 to 2 mm as a harmonic average particle size. When it is not less than 0.5 mm, the gas permeability in the sintering machine is promoted, while when it is not more than 2 mm, the sintering time is secured thereby to allow the strength of the sintered ore after the sintering to be developed.

Examples

Table 1 compares examples according to the invention with comparative examples according to the conventional method. In these examples, a gas permeability index, production rate and so on during the sintering in a pot testing device simulating a sintering machine are compared based on Comparative Examples 1 to 3, where steam is not blown into the drum mixer. Note that, in Comparative Examples 1 to 3, the temperature of the granulated raw material for sintering is set to about 42°C by an influence of heat (rise of + 7.5°C: common in the examples) generated when CaO ($\leq$ 2 mass%) added as a binder to a compounded raw material for sintering of 35°C before the charging into the drum mixer is reacted with water to produce $CaOH_2$.

In Comparative Examples 2 and 3, the ratio of the fine powdery iron ore in the compounded raw material for sintering increases, and accompanying therewith, the harmonic average particle size and gas permeability index of the granulated raw material for sintering as well as the production rate in the sintering machine are decreased.

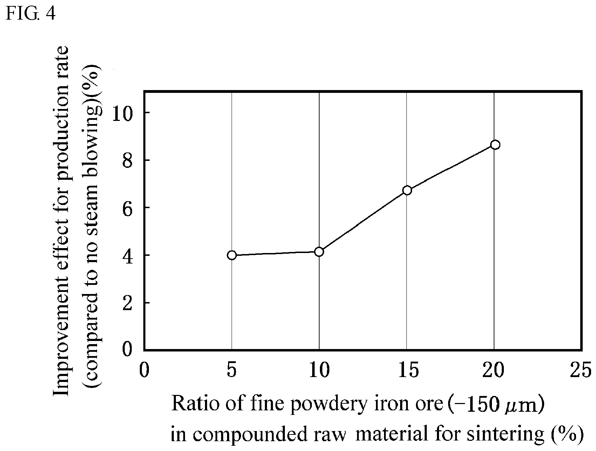

In Examples 1 to 4, the temperature of the compounded raw material for sintering is 35°C at the entry side of the drum mixer, and the temperature increase of the granulated raw material for sintering is not lower than 10°C, that is, the temperature of the granulated raw material for sintering is 55.7°C to 69.8°C, and accordingly a prominent effect is exerted in the gas permeability index and production rate. In Examples 2 and 3, the ratio of fine powdery ore in the compounding raw material for sintering is 15 mass% to 20 mass%, and the effect of improving the production rate is larger than that in the comparative example as compared to the condition of adding no steam at the same ratio of fine powdery ore. As shown in FIG. 4, when the ratio of fine powdery ore is not more than 10 mass%, the effect of improving the production rate with respect to the condition of adding steam in the drum mixer stays about 4%, while when the ratio of fine powdery ore is not less than 15 mass%, it is large as not less than 6%. This is due to the fact that as the ratio of fine powdery ore becomes higher, a ratio of collapse of the granulated particles is higher in the wet zone formed in association with the precipitation of water on the sintering machine. On the contrary, when the method according to the invention is adapted, it is considered that the precipitation of water is hardly caused and the formation of the wet zone is suppressed, and hence collapse of the granulated particles can be suppressed. Therefore, when the ratio of fine powdery ore in the compounded raw material for sintering is not less than 15 mass%, it is confirmed that the more remarkable effect can be obtained by adapting the method according to the invention.

Also, Examples 1 to 4 are examples of blowing steam under a condition of $W_{50}/Wm=1.2$. On the other hand, Example 5 is an example of changing $W_{50}/Wm$ to 0.8 under the same conditions as in Example 4 basically. As a result, the heating effect and the effect of increasing the production rate in the sintering machine equal to those of Example 4 can be obtained at a steam blowing amount (18.1 kg/t-s) smaller by 10% than that of Example 4. In Example 6, $W_{50}/Wm$ is changed to 0.6 under the basically same conditions as in Example 4. As a result, the heating effect and the effect of increasing the production rate in the sintering machine equal to those of Example 4 can be obtained at the steam blowing amount smaller by 20% than that of Example 4.

Table 1

| | | Comparative Example 1 | Comparative Example 2 | Comparative Example 3 | Example 1 | Example 2 | Example 3 | Example 4 | Example 5 | Example 6 |
|---|---|---|---|---|---|---|---|---|---|---|
| Steam blowing amount | kg/t-s | 0 | 0 | 0 | 4.4 | 4.4 | 44 | 20.1 | 18.1 | 16.1 |
| Temperature of granulated raw material for sintering at exit side of drum mixer | °C | 42.3 | 42.6 | 42.5 | 55.8 | 55.7 | 55.9 | 69.8 | 69.6 | 69.9 |
| Ratio of fine powdery ore (-150 $\mu$m) in compounded raw material for sintering | % | 10 | 15 | 20 | 10 | 15 | 20 | 15 | 15 | 15 |
| Harmonic average particle size of granulated raw material for sintering (pseudo particles) | mm | 0.92 | 0.85 | 0.80 | 0.93 | 0.86 | 0.81 | 0.84 | 0.83 | 0.84 |
| Gas permeability index | J.P.U | 16.6 | 15.8 | 14.9 | 17.2 | 16.5 | 16.3 | 17.1 | 17.0 | 17.3 |
| Yield of sintered ore product | % | 82.4 | 82.5 | 82.6 | 81.0 | 81.5 | 81.2 | 81.2 | 81.4 | 81.1 |
| Strength of sintered ore product | % | 73.6 | 73.8 | 73.7 | 73.4 | 73.2 | 73.2 | 73.5 | 73.7 | 73.4 |
| Production rate in sintering machine | t/hr/m$^2$ | 1.26 | 1.20 | 1.15 | 1.31 | 1.28 | 1.25 | 1.29 | 1.30 | 1.29 |
| * The harmonic average particle size is a reciprocal value of a valued determined by summing the product of the reciprocal of the representative particle size as a dry value and the weight ratio of each particle size. | | | | | | | | | | |

Industrial Applicability

Although the technique according to the invention is described in the example of heating the compounded raw material for sintering with steam, it is possible to utilize others as the vapor for heating.

Reference Signs List

1    drum mixer
2    granulated raw material for sintering
3    pallet of sintering machine

**Claims**

1. A sintered ore manufacturing method comprising:

   charging a granulated raw material for sintering formed by granulating a compounded raw material for sintering containing at least iron ore, carbon material and auxiliary material onto a circulating pallet, from a raw material feeding section of a sintering machine to form a charged layer, and
   igniting carbon material in the charged layer by using an ignition furnace while sucking a gas above the charged layer with a wind box arranged beneath the pallet thereby to introduce the gas into the charged layer to burn the carbon material,
   **characterized in that**
   the compounded raw material for sintering containing not less than 10 mass% of fine powdery iron ore with a particle size of not more than 150 $\mu$m is granulated in a granulator by blowing steam into the granulator in an amount of not less than 3 kg/t-s such that the granulated raw material for sintering to be charged onto the pallet is heated and humidified to have a temperature higher than a starting temperature of the compounded raw material for sintering before the charging into the granulator by not lower than 10°C,
   wherein the starting temperature of the compounded raw material for sintering before the charging into the granulator is from air temperature to 35°C, and wherein the granulated raw material for sintering is adjusted to have a water content of 6 to 10 mass% as a target value.

2. The sintered ore manufacturing method according to claim 1, wherein
   the granulated raw material for sintering is heated to a temperature of not lower than 45°C but lower than 70°C.

3. The sintered ore manufacturing method according to any one of claims 1 to 2, wherein
   when the temperature of the granulated raw material for sintering after the granulation exceeds 70°C, the water content of the granulated raw material for sintering is made to 0.5 mass% to 3.0 mass% higher than the target water content at the temperature of not higher than 70°C.

4. The sintered ore manufacturing method according to any one of claims 1 to 3, wherein
   the steam is directly blown toward the compounded raw material for sintering in the granulator so as to satisfy the following ratio:

$$W_{50}/Wm \leq 0.8,$$

   where $W_{50}$ is a width of the range in which a temperature increase by the steam blowing is not less than 50% of the maximum temperature increase, and
   Wm is a width where the compounded raw mixed material is present.

5. The sintered ore manufacturing method according to any one of claims 1 to 3, wherein
   the steam is blown directly toward the compounded raw material for sintering in the granulator so as to satisfy the following ratio:

$$W_{50}/Wm \leq 0.6,$$

where $W_{50}$ is a width of the range in which a temperature increase by the steam blowing is not less than 50% of the maximum temperature increase, and
Wm is a width where the compounded raw mixed material is present.

**Patentansprüche**

1. Verfahren zum Herstellen von gesintertem Erz, umfassend:

   Laden eines granulierten Rohmaterials zum Sintern, das durch Granulieren eines zusammengesetzten Rohmaterials zum Sintern gebildet ist, das mindestens Eisenerz, Kohlenstoffmaterial und Hilfsmaterial enthält, auf eine umlaufende Palette von einem Rohmaterialzuführabschnitt einer Sintermaschine, um eine geladene Schicht zu bilden, und
   Zünden von Kohlenstoffmaterial in der geladenen Schicht durch Verwenden eines Zündofens, während ein Gas oberhalb der geladenen Schicht mit einem unterhalb der Palette angeordneten Windkasten angesaugt wird, um dadurch das Gas in die geladene Schicht einzuführen und das Kohlenstoffmaterial zu verbrennen,
   **dadurch gekennzeichnet, dass**
   das zusammengesetzte Rohmaterial zum Sintern, das nicht weniger als 10 Masseprozent feines pulverförmiges Eisenerz mit einer Teilchengröße von nicht mehr als 150 $\mu$m enthält, in einem Granulator durch Einblasen von Dampf in den Granulator in einer Menge von nicht weniger als 3 kg/t-s granuliert wird, sodass das granulierte Rohmaterial zum Sintern, das auf die Palette geladen werden soll, auf eine Temperatur erhitzt und befeuchtet wird, die um nicht weniger als 10 °C höher ist als die Ausgangstemperatur des zusammengesetzten Rohmaterials zum Sintern vor dem Laden in den Granulator,
   wobei die Ausgangstemperatur des zusammengesetzten Sinterrohstoffs vor dem Laden in den Granulator zwischen Lufttemperatur und 35 °C ist und wobei das granulierte Rohmaterial zum Sintern eingestellt ist, um einen Wassergehalt von 6 bis 10 Masseprozent als Zielwert aufzuweisen.

2. Verfahren zum Herstellen von gesintertem Erz gemäß Anspruch 1, wobei das granulierte Rohmaterial zum Sintern auf eine Temperatur von nicht weniger als 45 °C, aber weniger als 70 °C erhitzt wird.

3. Verfahren zum Herstellen von gesintertem Erz gemäß einem der Ansprüche 1 bis 2, wobei
   wenn die Temperatur des granulierten Rohmaterials zum Sintern nach Granulierung 70 °C übersteigt, der Wassergehalt des granulierten Rohmaterials zum Sintern auf 0,5 Masseprozent bis 3,0 Masseprozent höher als der Zielwassergehalt bei einer Temperatur von nicht mehr als 70 °C eingestellt ist.

4. Verfahren zum Herstellen von gesintertem Erz gemäß einem der Ansprüche 1 bis 3, wobei
   der Dampf direkt auf das zu sinternde Rohmaterial im Granulator geblasen wird, sodass das folgende Verhältnis erfüllt ist:

$$W_{50}/Wm \leq S\ 0{,}8,$$

   wobei $W_{50}$ eine Breite des Bereichs ist, in dem eine Temperaturerhöhung durch das Dampfblasen nicht weniger als 50 % der maximalen Temperaturerhöhung ist, und Wm eine Breite ist, in der das zusammengesetzte Rohmaterial vorhanden ist.

5. Verfahren zum Herstellen von gesintertem Erz gemäß einem der Ansprüche 1 bis 3, wobei
   der Dampf direkt auf das zu sinternde Rohmaterial im Granulator geblasen wird, um das folgende Verhältnis zu erfüllen:

$$W_{50}/Wm \leq S\ 0{,}6,$$

   wobei $W_{50}$ eine Breite des Bereichs ist, in dem eine Temperaturerhöhung durch das Dampfblasen nicht weniger als 50 % der maximalen Temperaturerhöhung ist, und Wm eine Breite ist, in der das zusammengesetzte Rohmaterial vorhanden ist.

**Revendications**

1. Un procédé de fabrication de minerai fritté comprenant :

le chargement d'une matière première granulée pour le frittage, formée par granulation d'une matière première composée pour le frittage contenant au moins du minerai de fer, de la matière carbonée et une matière auxiliaire, sur une palette en circulation, à partir d'une section d'alimentation en matière première d'une machine de frittage pour former une couche chargée, et

l'allumage de la matière carbonée dans la couche chargée en utilisant un four d'allumage tout en aspirant un gaz au-dessus de la couche chargée avec une boîte à vent disposée sous la palette de manière à introduire le gaz dans la couche chargée pour brûler la matière carbonée,

**caractérisé en ce que**

la matière première composée pour le frittage contenant au moins 10 % en masse de minerai de fer en poudre fine avec une granulométrie ne dépassant pas 150 $\mu$m est granulée dans un granulateur en soufflant de la vapeur dans le granulateur en une quantité non inférieure à 3 kg/t-s de sorte que la matière première granulée pour le frittage à charger sur la palette est chauffée et humidifiée pour avoir une température supérieure à une température de départ de la matière première composée pour le frittage avant le chargement dans le granulateur d'au moins 10 °C,

dans lequel la température de départ de la matière première composée pour le frittage avant le chargement dans le granulateur est comprise entre la température de l'air et 35 °C, et dans lequel la matière première granulée pour le frittage est ajustée pour avoir une teneur en eau de 6 à 10 % en masse comme valeur cible.

2. Le procédé de fabrication de minerai fritté selon la revendication 1, dans lequel la matière première granulée pour le frittage est chauffée à une température non inférieure à 45 °C mais inférieure à 70 °C.

3. Le procédé de fabrication de minerai fritté selon l'une quelconque des revendications 1-2, dans lequel lorsque la température de la matière première granulée pour le frittage après la granulation dépasse 70 °C, la teneur en eau de la matière première granulée pour le frittage est rendue supérieure de 0,5 % en masse à 3,0 % en masse à la teneur en eau cible à la température ne dépassant pas 70 °C.

4. Le procédé de fabrication de minerai fritté selon l'une quelconque des revendications 1 à 3, dans lequel la vapeur est soufflée directement vers la matière première composée pour le frittage dans le granulateur de manière à satisfaire le rapport suivant :

$$W_{50}/Wm \le 0,8,$$

où $W_{50}$ est une largeur de la plage dans laquelle une augmentation de température par le soufflage de vapeur n'est pas inférieure à 50 % de l'augmentation de température maximale, et

Wm est une largeur où la matière première mélangée composée est présente.

5. Le procédé de fabrication de minerai fritté selon l'une quelconque des revendications 1 à 3, dans lequel la vapeur est soufflée directement vers la matière première composée pour le frittage dans le granulateur de manière à satisfaire le rapport suivant :

$$W_{50}/Wm \le 0,6,$$

où $W_{50}$ est une largeur de la plage dans laquelle une augmentation de température par le soufflage de vapeur n'est pas inférieure à 50 % de l'augmentation de température maximale, et

Wm est une largeur où la matière première mélangée composée est présente.

## FIG. 1(a)

Steam nozzle

1 (drum mixer)

Steam nozzle

Compounded raw material for sintering (low temperature)

Granulated raw material for sintering (high temperature)

## FIG. 1(b)

1 (drum mixer)

Steam pipe

2 (granulated raw material for sinterng)

FIG. 2

FIG. 3

FIG. 4

FIG. 5(a)

Steam nozzle

Steam

L

Granulated raw material
for sintering

Tmax

$(Tmax+To)/2$

To

Thermography
tremperature distribution

W50

FIG. 5(b)

Width (W50)

Distance (L)

FIG. 5(c)

L

W50

Wm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007169780 A
- JP 2013119667 A
- CN 107304461 A
- JP 2018003153 A